# FASCICULE DE BREVET EUROPEEN

(11) **EP 1 965 328 B1**
(45) Date de publication et mention de la délivrance du brevet: **14.01.2015**
(21) Numéro de dépôt: 08102189.1
(22) Date de dépôt: 29.02.2008
(51) Int. Cl.: G06F 21/88, G08B 13/22, G08B 13/14, H04W 12/12, H04W 88/02, G08B 21/02

(54) **Procédé de sécurisation et dispositif mobile ainsi sécurisé**
Sicherungsverfahren und damit gesichertes Mobilgerät
Securitisation method and mobile device thus secured

(30) Priorité: 02.03.2007 FR 0701539
(43) Date de publication de la demande: 03.09.2008
(73) Titulaire: Compagnie Industrielle et Financière d'Ingénierie Ingenico, 92220 Neuilly sur Seine (FR)
(72) Inventeur: Naccache, David, 75018, PARIS (FR)
(74) Mandataire: Bioret, Ludovic

(56) Documents cités:
- EP-A- 1 607 906
- FR-A- 2 855 895
- US-A- 5 406 261
- US-A- 6 151 493
- US-A1- 2004 178 907

## Description

La présente invention concerne un procédé de sécurisation de dispositif mobile, un dispositif mobile de traitement numérique ainsi sécurisé et un support de dispositif mobile particulier.

Les dispositifs mobiles de traitement numérique tels que téléphones mobiles, terminaux portables de paiement ou assistants personnels offrent une grande souplesse d'utilisation de part leur mobilité mais avec en contrepartie une certaine vulnérabilité au vol ou à la perte. Cette vulnérabilité est particulièrement critique lorsque le dispositif mobile contient des données sensibles qui en permettent une utilisation frauduleuse par une personne malveillante ayant le dispositif mobile entre les mains.

La lutte contre le vol ou la perte de dispositifs mobiles, fait l'objet de nombreuses recherches et études qui ont abouti à certaines solutions.

Le document FR2855895 propose un procédé dans lequel l'utilisateur d'un dispositif de radiocommunication appelle son dispositif et transmet un code qui a pour effet d'empêcher l'utilisation du dispositif ou d'avertir un tiers de la situation du dispositif disparu. L'intervention nécessaire de l'utilisateur peut présenter des inconvénients dans certain cas tels que, par exemple, ceux où l'utilisateur pour une raison ou une autre, n'a pas conscience de la perte ou du vol de son dispositif ou n'a pas la possibilité d'appeler son dispositif, soit parce qu'il n'a pas à portée de main un appareil pour le faire, soit parce qu'il en est physiquement empêché.

Le document FR2836616 propose un procédé similaire au précédent en ce qu'il consiste à envoyer un message texto ou SMS à son téléphone mobile. Ce message contient des paramètres identiques à des paramètres de contrôle que l'utilisateur a préalablement enregistrés. Un paramètre de contrôle d'accès est par exemple une date qui détermine une durée de vie à l'issue de laquelle le téléphone portable est automatiquement bloqué. On note ici encore l'implication forte de l'utilisateur pour programmer ses paramètres puis les gérer en communiquant avec son dispositif mobile.

Le but de la présente invention est de fournir un procédé de sécurisation et un dispositif mobile de traitement numérique ainsi sécurisé palliant au moins partiellement les inconvénients précités.

Plus particulièrement, l'invention vise à fournir un procédé qui déclenche une action de protection du dispositif mobile sans que l'utilisateur légitime ait besoin d'intervenir pour déclencher l'action de protection.

Plus précisément, l'invention vise à fournir un procédé à sécurité positive, c'est-à-dire avec déclenchement par défaut de l'action de protection.

L'invention vise aussi à fournir un procédé de sécurisation qui facilite autant que possible la vie de l'utilisateur légitime en cas d'appropriation frauduleuse du dispositif mobile.

A cette fin, la présente invention propose un procédé de sécurisation d'un dispositif mobile de traitement numérique comprenant :
- une étape de protection activée automatiquement lorsqu'une valeur évolutive dans le sens de se rapprocher d'une valeur de seuil et mesurée par le dispositif mobile, atteint ladite valeur de seuil et dans laquelle le dispositif mobile exécute une action de protection;
- une étape de confortement activée automatiquement lorsque le dispositif mobile et un support qui lui est associé, sont détectés dans un voisinage commun et dans laquelle ladite valeur évolutive est positionnée à une valeur éloignée de ladite valeur de seuil de façon à laisser ladite valeur évolutive se rapprocher naturellement de ladite valeur de seuil lorsque le dispositif mobile et ledit support ne sont plus détectés dans un voisinage commun.
   L'invention propose aussi un dispositif mobile de traitement numérique et respectivement un support de dispositif mobile comprenant des moyens de protection et des moyens de reconnaissance agencés pour exécuter les étapes du procédé et respectivement des moyens d'émission à courte distance de données, plus particulièrement une étiquette de radio identification (RFID), qui identifient le support.
   Suivant des modes de réalisation préférés, l'invention comprend une ou plusieurs des caractéristiques suivantes : l'action de protection consiste à détruire des données privées de l'utilisateur qui résident dans le dispositif mobile, à émettre une alarme détectable par un sens humain ou à envoyer un message à un destinataire préétabli ou choisi par l'utilisateur. Particulièrement, la valeur évolutive est de nature temporelle.
   D'autres caractéristiques et avantages de l'invention apparaîtront à la lecture de la description qui suit d'un mode de réalisation préféré de l'invention, donnée à titre d'exemple et en référence au dessin annexé.
- la figure 1 représente schématiquement un système conforme à l'invention;
- la figure 2 représente schématiquement un dispositif mobile conforme à l'invention ;
- la figure 3 représente schématiquement des étapes de procédé conforme à l'invention.

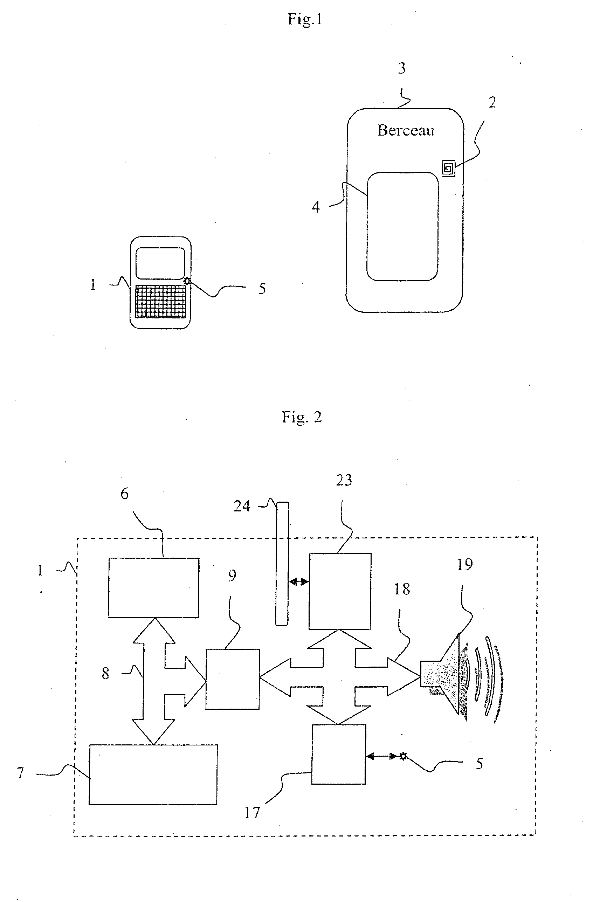

La figure 1 représente schématiquement un dispositif mobile 1 de traitement numérique tel qu'à titre d'exemple non limitatif un téléphone mobile, un terminal portatif de paiement ou un micro-ordinateur de poche. A ce dispositif mobile est associé un support 3 de type base. C'est par exemple un berceau dans lequel on replace régulièrement le dispositif mobile pour recharger ses batteries, pour le mettre en relation par des moyens de communication filaire avec un système particulier ou tout simplement pour le ranger.

Pour mettre en oeuvre l'invention, le support 3 comprend une balise 2 constituée par une partie passive de transpondeur telle qu'une étiquette de radio identification souvent nommée RFID (Radio Frequency Identification en anglais). On reconnaît souvent ce genre d'étiquettes à leur partie visible qui ressemble à un petit labyrinthe et qui est en fait l'antenne au centre de laquelle se trouve une puce électronique qui contient des données spécifiques. Un avantage est que ce genre d'étiquette comme généralement toute partie passive de transpondeur, constitue des moyens d'émission à courte distance qui ne nécessitent pas de source d'énergie propre pour émettre les données qu'il contient. C'est la partie active du transpondeur, par exemple un lecteur 5 d'étiquette RFID, qui fournit l'énergie nécessaire au processus d'émission des données par la partie passive.

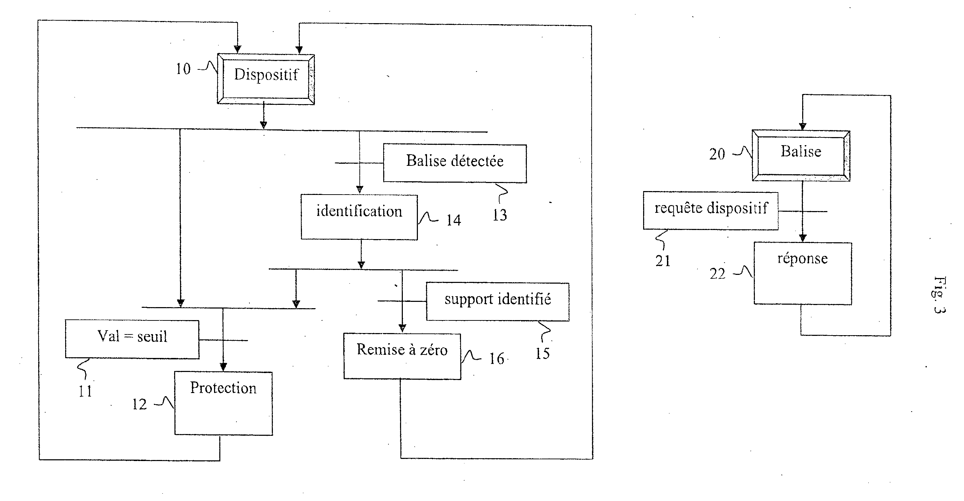

Ce type de processus est bien connu mais on peut en rappeler rapidement l'essentiel à l'éclairage de la figure 3. La balise 2, en l'occurrence l'étiquette RFID se trouve le plus souvent hors tension dans une étape initiale 20. Un signal de requête à la fréquence appropriée fournit alors suffisamment de tension à l'étiquette RFID pour valider une transition 21 qui y fait passer l'étiquette de l'étape 20 à une étape 22. La tension générée par le signal de requête est généralement suffisant à l'étiquette en étape 22 pour éventuellement contrôler la requête et pour émettre une ou quelques données de sa mémoire avant de retourner en étape 20. Si la réponse à fournir en étape 22 contient plus de données que ne peuvent en être émises en un cycle, la requête se présente sous forme d'une rafale de signaux qui à chaque retour en étape 20, valide à nouveau la transition 21 de façon à lire successivement la totalité des données. Comme nous le verrons dans la suite de la description, les données à émettre par la balise 2, identifient le support.

Le dispositif mobile 1 est équipé du lecteur 5 qui lit automatiquement le contenu de la balise 2 lorsqu'il est approché du support 3. Il est possible de disposer d'une part le lecteur 5 sur le dispositif mobile et d'autre part la balise 2 sur le support de façon à imposer un rangement effectif du dispositif mobile 1 dans le berceau du support pour réaliser une approche adéquate du lecteur et de la balise. La balise contient des données qui identifient et associent le support de façon spécifique au dispositif mobile. Ces données comprennent par exemple un code crypté. On peut aussi envisager d'incruster, voire de noyer, la balise dans la matière constituant le support 3 de façon à ce que toute tentative d'arracher la balise pour la reporter sur un autre support, conduise à mettre la balise hors d'usage.

En référence à la figure 2, le dispositif mobile 1 comprend un microprocesseur 6, une mémoire 7 et une interface d'entrées-sorties 9, reliés l'un à l'autre par un bus système 8. Un bus d'entrées-sorties 18 relie l'interface 9 à un coupleur 17 de lecture agencé pour lire des informations en provenance de la balise 2 au moyen du lecteur 7 plus particulièrement de type lecteur d'étiquette de radio identification. D'autres périphériques sont généralement connectés au bus 18 tel que par exemple un ensemble carte son haut parleur 19, un vibreur, une diode électroluminescente émettrice de flashs ou tout autre moyen d'émission d'alarme détectable par un sens humain. Lorsque le dispositif mobile est un appareil de communication à distance, un coupleur 23 est connecté d'une part au bus 18 et d'autre part à une antenne radio 24 pour émettre et recevoir des messages traités par le processeur 6.

La mémoire 7 est à considérer dans sa nature la plus étendue, elle peut comprendre de la mémoire volatile RAM ou autre, de la mémoire permanente résidant sur un disque ou sur une carte à microprocesseur... La mémoire 7 contient des données privées de l'utilisateur qui sont par exemple, des références d'abonnement pour un téléphone mobile, des références bancaires pour un terminal de paiement et éventuellement d'autres données dont l'accès ou l'utilisation par d'autres personnes que l'utilisateur, pourrait être préjudiciable à l'utilisateur. Il s'agit par exemple d'un répertoire de contacts, de fichiers personnels.

Dans le mode de réalisation de l'invention ici présenté, des moyens de protection sont agencés de la façon suivante.

Un premier mot numérique de nature compteur en mémoire 7 ou directement dans une case mémoire du coupleur 17, est destiné à contenir une valeur évolutive. L'évolution de cette valeur résulte d'une mesure réalisée périodiquement par le processeur 6.

A titre illustratif, on sait que le fonctionnement d'un dispositif de traitement numérique est généralement rythmé par une horloge système. Un programme en mémoire 7 agencé en combinaison avec le processeur 6 pour cumuler des impulsions d'horloge, constitue des moyens d'horloge qui génèrent une valeur évolutive de nature temporelle. Comparable à une durée, la valeur évolutive est alors croissante.

A titre illustratif encore, on sait que le fonctionnement d'un dispositif de traitement numérique consomme généralement une énergie fournie par une batterie. Un programme en mémoire 7 agencé en combinaison avec le processeur 6 pour relever périodiquement le niveau de la batterie et le reporter dans le premier mot numérique, constitue d'autres moyens que des moyens d'horloge qui génèrent une valeur évolutive d'autre nature que de nature temporelle. La consommation provoquant un épuisement de la batterie, la valeur évolutive est alors décroissante.

Un deuxième mot numérique de nature constante ou paramétrable, est destiné à contenir une valeur de seuil. La valeur de seuil est typiquement supérieure à une valeur à laquelle comme nous le verrons par la suite, on initialise le premier mot numérique lorsque la valeur évolutive est croissante. La valeur de seuil est typiquement inférieure à une valeur à laquelle comme nous le verrons par la suite, on initialise le premier mot numérique lorsque la valeur évolutive est décroissante. Le choix de la valeur de seuil est déterminé de façon à permettre à la valeur du premier mot numérique d'évoluer dans le sens de se rapprocher de la valeur de seuil avant de déclencher une action de protection.

Le programme en mémoire 7 comprend des instructions logiques pour comparer le premier et le deuxième mot numérique et pour exécuter une action de protection lorsque les contenus des deux mots numériques sont égaux.

Les instructions logiques pour exécuter une action de protection comprennent par exemple à un premier stade des instructions d'émission d'alarme détectable par un sens humain. En effet le danger d'emploi frauduleux du dispositif mobile est moindre si le dispositif est simplement égaré dans une pièce ou une autre d'un appartement. Une sonnerie si le sens humain est l'ouïe ou une succession de flash si le sens humain est la vue, par exemple pour éviter de perturber le sommeil d'un enfant, constitue alors un moyen pour permettre à l'utilisateur de récupérer son dispositif mobile.

Les instructions logiques pour exécuter une action de protection comprennent par exemple à un deuxième stade des instructions pour générer un message et commander le coupleur 23 de façon à envoyer au moyen de l'antenne 24, le message à un destinataire désigné. Les coordonnées et éventuellement un contenu vocal ou écrit, sont mémorisés dans une zone de la mémoire 7 prévue à cet effet. Le destinataire peut être préétabli comme c'est le cas d'un opérateur téléphonique ou bancaire pour suspendre un abonnement ou respectivement un débit avant de retrouver le dispositif mobile. Le destinataire peut aussi être choisi par l'utilisateur comme par exemple l'utilisateur lui-même sur un autre téléphone pour lui rappeler de prendre soin de son dispositif mobile.

Les instructions logiques pour exécuter une action de protection comprennent par exemple à un troisième stade, indépendamment de l'existence ou non des instructions précédemment mentionnées, des instructions pour effacer tout ou partie des données privées, confidentielles ou chiffrées en mémoire 7 ou en tout autre endroit à l'intérieur du dispositif mobile 1. Ceci évite une exploitation frauduleuse du dispositif mobile par un voleur.

Dans le mode de réalisation de l'invention ici présenté, des moyens de reconnaissance sont agencés de la façon suivante.

Le coupleur 17 est agencé pour détecter une proximité du support 3 lorsque le lecteur 5 émettant en permanence un signal d'écoute radio, reçoit une réponse de la balise 2.

Un troisième mot numérique de nature identificateur en mémoire 7 ou directement dans une case mémoire du coupleur 17, est destiné à contenir une valeur permettant de reconnaître que la balise 2 est celle du support 3 associé au dispositif mobile 1. C'est par exemple tout simplement une chaîne alphanumérique correspondant à une chaîne alphanumérique identique qui est stockée dans la balise 2. De façon plus élaborée, c'est par exemple encore une clé publique dont la clé privée est cachée dans la balise 2 de façon à effectuer une identification par défi réponse.

La mémoire 7 contient une ou plusieurs séquences d'instructions logiques organisées de façon à identifier la balise et en cas d'identification valide, pour initialiser le premier mot numérique en positionnant la valeur évolutive à une valeur supérieure ou inférieure à celle contenue dans le deuxième mot mémoire, en cas de valeur évolutive décroissante ou respectivement croissante de façon à laisser la valeur évolutive se rapprocher naturellement de ladite valeur de seuil lorsque le support n'est plus détecté à proximité du dispositif mobile

Le fonctionnement des moyens techniques ci-dessus exposés va maintenant être expliqué plus en détail en référence à la figure 3.

Un procédé de sécurisation de dispositif mobile de traitement numérique conforme à l'invention, comprend une étape 12 de protection activée automatiquement lorsqu'une transition 11 est valide.

Le dispositif mobile étant initialement dans une étape d'attente 10, la transition 11 est validée lorsque Val = seuil. Val est typiquement la valeur évolutive mesurée par le dispositif mobile dont il a été discuté plus haut dans la description. Dans l'étape 10, le dispositif mobile n'est pas nécessairement inactif et peut exécuter d'autres actions que celles du procédé. Particulièrement lorsque la valeur évolutive est de nature temporelle, l'égalité de la transition 11 est en fait vérifiée lorsque le dispositif mobile est resté suffisamment longtemps éloigné de son support pour faire évoluer la valeur évolutive dans le sens de se rapprocher de la valeur de seuil au point de l'atteindre. Ceci peut se produire par exemple lorsque le dispositif mobile ayant été volé ou perdu indépendamment de son support, n'y est pas retourné dans une période prédéterminée.

L'action de protection exécutée dans l'étape 12 est unique et irréversible ou différenciée et graduelle. L'action irréversible est typiquement celle qui consiste à détruire des données privées de l'utilisateur qui résident dans le dispositif mobile. Ceci évite au dispositif mobile d'être compromis lorsqu'il est volé sauf pour le voleur à voler aussi le support.

Une action moins violente consiste à émettre une alarme détectable par un sens humain qui, si elle est décelée par l'utilisateur légitime (simple perte ou oubli), lui permet de prendre plus grand soin de son appareil en le ramenant par exemple sur son support. L'action de protection qui consiste à envoyer un message à un destinataire préétabli ou choisi par l'utilisateur, permet de réutiliser le dispositif mobile lorsque celui-ci est retrouvé en prenant soin éventuellement d'effectuer quelques vérifications.

Un procédé de sécurisation de dispositif mobile de traitement numérique conforme à l'invention, comprend une étape 16 de confortement activée automatiquement lorsqu'une transition 15 est validée.

La transition 15 est validée lorsque, ayant approché le dispositif mobile d'un support, le support est identifié par le dispositif mobile comme étant le support associé au dispositif mobile.

Dans l'étape 16, la valeur évolutive est positionnée à une valeur éloignée de la valeur de seuil de façon à laisser ladite valeur évolutive se rapprocher naturellement de ladite valeur de seuil lorsque le dispositif mobile et ledit support ne sont pas détectés dans un voisinage commun. Lorsque la valeur évolutive est de nature temporelle, elle est remise à zéro, la valeur de seuil correspondant alors à la durée au bout de laquelle il y a lieu de s'inquiéter en absence de retour du terminal sur son support.

On appréciera l'avantage du procédé pour l'utilisateur qui n'a d'autre souci que celui de ranger régulièrement le dispositif mobile sur son support, ce qui est assez naturel ne serait-ce que pour remettre en charge le dispositif mobile. Toutes les actions sont ensuite automatiquement effectuées sans avoir besoin de l'utilisateur, en particulier lorsque l'utilisateur est indisponible pour une raison ou une autre.

L'étape 16 est généralement précédée d'une étape 14 activée lorsque le dispositif mobile étant dans l'étape 10, une transition 13 est validée.

La transition 13 est validée lorsque la balise 2 est détectée par le lecteur 5.

L'étape 14 sert à vérifier que le support détecté dans un voisinage commun avec le dispositif mobile est le support qui lui est associé. Pour cela, le dispositif mobile lance une procédure d'identification de la balise 2 qui dans sa forme la plus simple consisterait à lire une chaîne alphanumérique contenue dans la balise 2 et à la comparer à son équivalent contenu dans le dispositif mobile. On conçoit que cette façon de procéder n'est pas des plus sécuritaires. Il suffirait à un intrus de lire cette chaîne alphanumérique et de la reproduire sur une autre balise pour fabriquer de faux supports. Dans un mode de réalisation préféré, la balise cache une clé privée dont la clé publique correspondante est détenue par le dispositif mobile. Le dispositif mobile 1 génère un nombre aléatoire qu'il chiffre avec la clé publique avant de l'envoyer à la balise 2. La balise renvoi le nombre reçu après l'avoir chiffré avec sa clé privée. Si le nombre reçu par le dispositif mobile est le nombre aléatoire généré avant d'être chiffré avec la clé publique, le dispositif mobile est conforté dans l'identification car seule la balise associée au dispositif mobile possède la clé privée.

Une balise inviolable sur le support du dispositif mobile présente l'effet technique supplémentaire d'empêcher de réaliser des copies illicites du support.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de sécurisation d'un dispositif mobile de traitement numérique comprenant :
- une étape (12) de protection activée automatiquement lorsqu'une valeur évolutive dans le sens de se rapprocher d'une valeur de seuil et mesurée par le dispositif mobile, atteint ladite valeur de seuil et dans laquelle le dispositif mobile exécute une action de protection;
- une étape (16) de positionnement de ladite valeur évolutive activée automatiquement lorsque le dispositif mobile et un support qui lui est associé, sont détectés dans un voisinage commun et dans laquelle ladite valeur évolutive est positionnée à une valeur éloignée de ladite valeur de seuil de façon à laisser ladite valeur évolutive se rapprocher naturellement de ladite valeur de seuil lorsque le dispositif mobile et ledit support ne sont plus détectés dans un voisinage commun.

2. Procédé de sécurisation d'un dispositif mobile selon la revendication 1, **caractérisé en ce que** l'action de protection consiste à détruire des données privées de l'utilisateur qui résident dans le dispositif mobile.

3. Procédé de sécurisation d'un dispositif mobile selon la revendication 1, **caractérisé en ce que** l'action de protection consiste à émettre une alarme détectable par un sens humain.

4. Procédé de sécurisation d'un dispositif mobile selon la revendication 1, **caractérisé en ce que** l'action de protection consiste à envoyer un message à un destinataire préétabli ou choisi par l'utilisateur.

5. Procédé de sécurisation d'un dispositif mobile selon l'une des revendications précédentes, **caractérisé en ce que** ladite valeur évolutive est de nature temporelle.

6. Dispositif mobile (1) de traitement numérique comprenant :
- des moyens de protection (6,7) agencés pour mesurer une valeur évolutive dans le sens de se rapprocher d'une valeur de seuil, pour détecter une atteinte de ladite valeur de seuil par ladite valeur évolutive et pour exécuter une action de protection lorsque ladite valeur de seuil est atteinte;
- des moyens de reconnaissance (17,5) d'un support associé au dispositif mobile, agencés pour détecter une proximité du dit support et pour positionner ladite valeur évolutive à une valeur éloignée de ladite valeur de seuil de façon à laisser ladite valeur évolutive se rapprocher naturellement de ladite valeur de seuil lorsque ledit support n'est plus détecté à proximité du dispositif mobile.

7. Dispositif mobile de traitement numérique selon la revendication 6 **caractérisé en ce qu'**il comprend des moyens de destruction de données privées de l'utilisateur qui résident dans le dispositif mobile, pour exécuter ladite action de protection.

8. Dispositif mobile de traitement numérique selon la revendication 6 **caractérisé en ce qu'**il comprend des moyens (19) d'émission d'alarme détectable par un sens humain, pour exécuter ladite action de protection.

9. Dispositif mobile de traitement numérique selon la revendication 6 **caractérisé en ce qu'**il comprend des moyens (23, 24) agencés en vue d'envoyer un message à un destinataire préétabli ou choisi par l'utilisateur, pour exécuter ladite action de protection.

10. Dispositif mobile de traitement numérique selon l'une des revendications 6 à 9 **caractérisé en ce qu'**il comprend des moyens d'horloge agencés pour générer une valeur évolutive de nature temporelle.

11. Dispositif mobile (1) de traitement numérique selon l'une des revendications 6 à 10 **caractérisé en ce que** les dits moyens de reconnaissance comprennent un lecteur d'étiquette de radio identification.

12. Support (3) de dispositif mobile de traitement numérique selon l'une des revendications 6-11, **caractérisé en ce qu'**il comprend des moyens d'émission à courte distance (2) de données qui identifient le support.

13. Support de dispositif mobile de traitement numérique selon la revendication 12, **caractérisé en ce que** les dits moyens d'émission à courte distance (2) comprennent une étiquette de radio identification.

## Patentansprüche

1. Verfahren zur Sicherung eines Mobilgeräts mit digitaler Verarbeitung, umfassend:
- einen Schritt (12) zum Schutz, der automatisch aktiviert wird, wenn ein Entwicklungswert, der sich einem Schwellenwert annähert und von dem Mobilgerät gemessen wird, den Schwellenwert erreicht und wobei das Mobilgerät eine Schutzmaßnahme ausführt;
- einen Schritt (16) zur Festlegung des Entwicklungswerts, der automatisch aktiviert wird, wenn das Mobilgerät und ein Halter, mit dem es verbunden ist, in einer gemeinsamen Umgebung erfasst werden und wobei der Entwicklungswert auf einem Wert festgelegt wird, der von dem Schwellenwert entfernt ist, damit sich der Entwicklungswert natürlich an den Schwellenwert annähern kann, wenn das Mobilgerät und der Halter nicht in einer gemeinsamen Umgebung erfasst werden.

2. Verfahren zur Sicherung eines Mobilgeräts nach Anspruch 1, **dadurch gekennzeichnet, dass** die Schutzmaßnahme darin besteht, private Daten des Nutzers, die in dem Mobilgerät vorhanden sind, zu zerstören.

3. Verfahren zur Sicherung eines Mobilgeräts nach Anspruch 1, **dadurch gekennzeichnet, dass** die Schutzmaßnahme darin besteht, einen Alarm zu senden, der von einem menschlichen Sinn erfasst werden kann.

4. Verfahren zur Sicherung eines Mobilgeräts nach Anspruch 1, **dadurch gekennzeichnet, dass** die Schutzmaßnahme darin besteht, eine Mitteilung an einen vorher festgelegten oder einen vom Nutzer ausgewählten Empfänger zu schicken.

5. Verfahren zur Sicherung eines Mobilgeräts nach einem der vorhergehenden Ansprüche, **dadurch gekennzeichnet, dass** der Entwicklungswert zeitlicher Art ist.

6. Mobilgerät (1) mit digitaler Verarbeitung, umfassend:
- Mittel zum Schutz (6, 7), die eingerichtet sind, um einen Entwicklungswert, der sich einem Schwellenwert annähert, zu messen, um ein Erreichen des Schwellenwerts durch den Entwicklungswert zu erfassen und um eine Schutzmaßnahme auszuführen, wenn der Schwellenwert erreicht ist;
- Mittel zum Erkennen (17, 5) eines Halters, der mit dem Mobilgerät verbunden ist, die eingerichtet sind, um eine Nähe des Halters zu erfassen und um den Entwicklungswert auf einen Wert festzulegen, der von dem Schwellenwert entfernt ist, damit sich der Entwicklungswert natürlich an den Schwellenwert annähern kann, wenn der Halter nicht mehr in der Nähe des Mobilgeräts erfasst wird.

7. Mobilgerät mit digitaler Verarbeitung nach Anspruch 6, **dadurch gekennzeichnet, dass** es Mittel zur Zerstörung von privaten Daten des Nutzers umfasst, die in dem Mobilgerät vorhanden sind, um die Schutzmaßnahme auszuführen.

8. Mobilgerät zur digitalen Verarbeitung nach Anspruch 6 **dadurch gekennzeichnet, dass** es Mittel (19) zum Senden eines Alarms umfasst, der von einem menschlichen Sinn erfasst werden kann, um die Schutzmaßnahme auszuführen.

9. Mobilgerät mit digitaler Verarbeitung nach Anspruch 6, **dadurch gekennzeichnet, dass** es Mittel (23, 24) umfasst, die eingerichtet sind, um eine Mitteilung an einen vorher festgelegten oder vom Nutzer ausgewählten Empfänger zu schicken, um die Schutzmaßnahme auszuführen.

10. Mobilgerät mit digitaler Verarbeitung nach einem der Ansprüche 6 bis 9, **dadurch gekennzeichnet, dass** es Mittel zur Zeitgebung umfasst, die eingerichtet sind, um einen Entwicklungswert zeitlicher Art zu erzeugen.

11. Mobilgerät (1) zur digitalen Verarbeitung nach einem der Ansprüche 6 bis 10, **dadurch gekennzeichnet, dass** die Mittel zum Erkennen ein Radiofrequenz-Identifikationsetikettenlesegerät umfassen.

12. Halter (3) des Mobilgeräts mit digitaler Verarbeitung nach einem der Ansprüche 6 bis 11, **dadurch gekennzeichnet, dass** er Mittel zum Senden im Nahbereich (2) von Daten umfasst, die den Halter identifizieren.

13. Halter des Mobilgeräts mit digitaler Verarbeitung nach Anspruch 12, **dadurch gekennzeichnet, dass** die Mittel zum Senden im Nahbereich (2) ein Radiofrequenz-Identifikationsetikett umfassen.

## Claims

1. Method for securing a mobile digital processing device comprising:
- a protective step (12) that is self-activated when the mobile device measures an evolutionary value approaching a threshold value and wherein the mobile device executes a protective action
- a step of self-setting (16) said evolutionary value when the mobile device and a holder associated therewith are detected in a common vicinity and wherein said evolutionary value is positioned at a value remote from said threshold value, so as to allow said evolutionary value to approach said threshold value naturally, when the mobile device and said holder are no longer detected in a common vicinity.

2. Method of securing a mobile device of claim 1, **characterised in that** the protective action consists in destroying private user data residing within the mobile device.

3. Method of securing a mobile device of claim 1, **characterised in that** the protective action consists in sounding an alarm that can be detected by a human sense.

4. Method of securing a mobile device of claim 1, **characterised in that** the protective action consists in sending a message to a recipient pre-established or chosen by the user.

5. Method of securing a mobile device as claimed in one of the preceding claims, **characterised in that** said evolutionary threshold value is temporal by nature.

6. Mobile digital processing device (1) comprising:
- protective means (6, 7) designed to measure an evolutionary value in the direction of approaching a threshold value, in order to detect attainment of said threshold value by said evolutionary value and to execute a protective action when said threshold value is attained
- means of recognising (17, 5) a holder associated with the mobile device, designed to detect the proximity of said holder and to position said evolutionary value at a value remote from said threshold value, so as to allow said evolutionary value to approach said threshold value naturally, when said holder is no longer detected within proximity to the mobile device.

7. Mobile digital processing device of claim 6, **characterised in that** it comprises means of destroying private user data residing within the mobile device, in order to execute said protective action.

8. Mobile digital processing device of claim 6, **characterised in that** it comprises means (19) for sounding an alarm that can be detected by a human sense, in order to execute said protective action.

9. Mobile digital processing device of claim 6, **characterised in that** it comprises means (23, 24) designed to send a message to a recipient pre-established or chosen by the user, in order to execute said protective action.

10. Mobile digital processing device as claimed in one of claims 6 to 9, **characterised in that** it comprises clock means designed to generate an evolutionary value of a temporal nature.

11. Mobile digital processing device (1) as claimed in one of claims 6 to 10, **characterised in that** said recognition means comprise a radio frequency identification tag reader.

12. Mobile digital processing device holder (3) as claimed in one of claims 6 to 11, **characterised in that** it comprises short-range data transmission means (2) which identify the holder.

13. Mobile digital processing device holder of claim 12, **characterised in that** said short-range transmission means (2) comprise a radio frequency identification tag.
